**Europäisches Patentamt**

(19) **European Patent Office**

**Office européen des brevets**

(11) Veröffentlichungsnummer: **0 236 343**

**B1**

# (12) EUROPÄISCHE PATENTSCHRIFT

(45) Veröffentlichungstag der Patentschrift:
04.10.89

(21) Anmeldenummer: 86904176.4

(22) Anmeldetag: 23.07.86

(86) Internationale Anmeldenummer:
PCT/EP 86/00432

(87) Internationale Veröffentlichungsnummer:
WO 87/01613 (26.03.87 Gazette 87/07)

(51) Int. Cl.⁴: **B 01 D 53/36**

(54) **VERFAHREN UND ANLAGE ZUR REINIGUNG DER ABGASE VON FEUERUNGSANLAGEN.**

(30) Priorität: 18.09.85 DE 3533199

(43) Veröffentlichungstag der Anmeldung:
16.09.87 Patentblatt 87/38

(45) Bekanntmachung des Hinweises auf die Patenterteilung:
04.10.89 Patentblatt 89/40

(84) Benannte Vertragsstaaten:
AT BE DE FR GB IT NL SE

(56) Entgegenhaltungen:
EP-A-0 161 470

(73) Patentinhaber: Kraftanlagen AG., Im Breitspiel 7,
D-6900 Heidelberg 1 (DE)

(72) Erfinder: VESER, Kurt, Berghalde 29, D-6900
Heidelberg (DE)
Erfinder: FRAUENFELD, Martin, Mühltalstrasse 18,
D-6900 Heidelberg (DE)
Erfinder: MÜLLER-ODENWALD, Hermann, Eugen,
L 13,8, D-6900 Mannheim (DE)

(74) Vertreter: Helber, Friedrich G., Dipl.-Ing.,
Patentanwälte Dipl.-Ing. F. G. Helber Dipl.-Ing.
J.K. Zenz Giesser Weg 47, D-6144 Zwingenberg
(DE)

## Beschreibung

Die Erfindung betrifft ein Verfahren zur Reinigung der Abgase von Feuerungsanlagen in Nachschaltung zur Entschwefelung unter selektiver Reduktion der Stickoxide durch Einleiten chemischer Verbindungen und Einsatz von katalytisch wirkenden Oberflächen zur Beschleunigung und Einleitung der Reaktion unter Erhitzen der Abgase auf die für die Reduktion erforderliche Temperatur sowie eine Anlage zur Durchführung des Verfahrens.

Es ist bekannt zur selektiven Reduktion der in den Kesselabgasen enthaltenen Stickoxide chemische Verbindungen, insbesondere Ammoniak, dampfförmig unter Druck oder drucklos in Wasser gelöst oder mit Luft in den aus einer Feuerungsanlage austretenden Abgasstrom einzudosieren, wobei zu beachten ist und entsprechende Maßnahmen zu treffen sind, daß eine gleichmäßige Verteilung des eingeführten Ammoniaks und eine gleichmäßige Temperaturverteilung innerhalb des Abgasstroms für die Reduktion vorliegt und hierfür geeignete katalytisch wirkende Oberflächen eingesetzt werden. Derartige Anlagen wurden vor allem zwischen Ekonomiser und Kesselluftvorwärmer eingeschaltet, um in Abstimmung mit den gewählten katalytisch wirkenden Verbindungen im Bereich optimaler Reaktionstemperaturen die Reduzierung der Stickoxide vorzunehmen. Die katalytisch wirkenden Oberflächen wurden in ausgeführten Anlagen in einer statischen Wabenstruktur mit vorzugsweise vertikal nach unten gerichteter Strömung zur Verfügung gestellt. Durch die vertikal nach unten gerichtete Gasführung soll dabei die Ablagerung fester Verunreinigungen auf den katalytisch wirkenden Oberflächen herabgesetzt und ihr Entfernen erleichtert werden.

In Weiterentwicklung dieses Grundgedankens wurde auch bereits vorgeschlagen, die katalytisch wirkenden Oberflächen im Wechsel von Abgasen und Verbrennungsluft im Gegenstrom zu beaufschlagen, wobei die Lage der von Abgasen und Luft durchströmten Zonen dieser Oberflächen relativ zu den Anschlußkanälen schrittweise oder kontinuierlich durch einen entsprechenden Antrieb geändert wird. Auf diesem Wege werden zuvor von Abgasen überströmte Oberflächen nachfolgend von Frischluft und umgekehrt beaufschlagt (WO-A-85/03 645). Dieser Verfahrensweise liegt vor allem der Gedanke zugrunde, den zur Reduktion von Stickoxiden eingesetzten Katalysator einerseits und den umlaufenden Regenerativ-Wärmetauscher zur Vorwärmung der Verbrennungsluft mit Hilfe von Abgaswärme andererseits miteinander zu kombinieren bzw. katalytisch wirkende Oberflächen in den Kesselluftvorwärmer zu integrieren und hierdurch den Bauaufwand herabzusetzen. Der zu den behandelnden Abgasen entgegengerichtet geführte, die katalytisch wirkenden Oberflächen als Reingas beaufschlagende Luftstrom und die vorhandene Reinigungseinrichtungen des Kesselluftvorwärmers sollten hierbei gleichermaßen zur Abreinigung und Regeneration der katalytisch wirkenden Oberflächen eingesetzt werden.

In diesem Zusammenhang wurden auch bereits die unterschiedlichsten Vorschläge für die Art der Ammoniakzufuhr, u.a. - nach einem nicht vorveröffentlichten Stand der Technik durch Eindüsen in die Frischluft - unterbreitet, um nachteilige Neben- und damit verbundene Folgereaktionen, vor allem die Bildung von Ammoniumhydrogensulfat durch das eingesetzte Reduktionsmittel und die im Abgas vorhandenen Schwefelverbindungen, insbesondere Schwefeltrioxid und Schwefelsäure, auszuschließen (WO-A-86/01 431).

Statische Katalysatoren wurden dagegen wegen ihres erheblichen Gewichts und zur Verminderung des Bauaufwandes in Nachschaltung zur Entschwefelung angeordnet. Hierbei mußte der Nachteil in Kauf genommen werden, daß das Temperaturoptimum der eingesetzten katalytisch wirkenden Verbindungen zur selektiven Reduktion der Stickoxide nur über die Zufuhr von zusätzlicher Fremdenergie zu erreichen ist.

Zur Herabsetzung des Fremdenergiebedarfs für die Einstellung optimaler Reaktionstemperaturen ist es sinnvoll, in Vorschaltung zur Fremdenergiezufuhr eine Wärmeübertragung von den bereits durch die Reduktionsbehandlung von Stickoxiden befreiten Reingasen vor deren Eintritt in den Abgaskamin zu den der Reduktion noch zu unterziehenden Gasen vorzunehmen und hierfür Wärmetauscher, und zwar insbesondere umlaufende Regenerativ-Wärmetauscher, einzusetzen, um einerseits die Abgase auf die erforderliche Kamineintrittstemperatur herabzukühlen und andererseits die der Reduktion der Stickoxide zuzuführenden Gase nach der überwiegend in einer Naßwäsche erfolgten Entschwefelung zunächst vorzuwärmen, bevor eine Fremdenergiezufuhr erfolgt. Die Zudosierung des Reduktionsmittels erfolgte dabei unmittelbar in die in den Katalysator eintretenden Gase. Diese verbrauchsbezogene Einleitung soll die Menge des eingesetzten Ammoniaks auf die für die vollständige Reduktion erforderliche Menge beschränken.

Es wurde beobachtet, daß bei der Reduzierung von Stickoxiden unter Zufuhr von Ammoniak als Reduktionsmittel vor der eigentlichen Umwandlung zu elementarem Stickstoff und Wasser in einer unerwünschten Nebenreaktion der Restschwefelgehalt - vor allem Schwefeldioxid - mit Sauerstoff in Schwefeltrioxid umgewandelt wird. Als unerwünschte Folgereaktion entsteht dann bei den üblichen, für die Reduktion der Stickoxide gewählten optimalen Temperaturen aus Ammonium und Schwefeltrioxid sowie dem vorhandenen Wasser Ammoniumhydrogensulfat. Die verfügbaren Mischstrecken zur Einleitung des Ammoniaks oder ihre Verteilung führte zu einer Störung des erforderlichen Ammoniak-Stickoxid-Verhältnisses, so daß bereits bei einem Ammoniak-Überschuß von mehr als 5 ppm Katalysatorverschmutzungen und -vergiftungen durch das gebildete Ammoniumhydrogensulfat nicht zu vermeiden waren.

Der Erfindung liegt demgegenüber die Aufgabe zugrunde, ein Verfahren und eine Anlage zur Durchführung des Verfahrens zur selektiven Reduktion von in Feuerungsabgasen enthaltenen Stickoxiden unter Zufuhr reduzierender Verbindungen und Einsatz katalytisch wirkender Oberflächen zu schaffen, bei denen die Reduktion der Stickoxide wesentlich verbessert, Reduktionsmittel eingespart und die Standzeit der katalytisch wirkenden Oberflächen durch das Unterbinden von Neben- und Folgereaktionen erhöht wird.

Unter Berücksichtigung der Erkenntnis, daß die Reduktion von Stickoxiden, die sich innerhalb von Feuerungsabgasen zu ca. 95 % aus Stickstoffmonoxid und ca. 5 % Stickstoffdioxid zusammensetzen, zu molekularem Stickstoff und Wasser nicht allein vom Verhältnis der Menge des zugeführten Reduktionsmittels zum Stickoxid-Gehalt innerhalb des Abgasstroms sowie dessen Temperaturniveau, sondern in wesentlichem Umfang auch von der Wirksamkeit und damit auch der Erhaltung dieser Wirksamkeit der verfügbaren katalytisch wirkenden Oberflächen abhängt, wird diese Aufgabe ausgehend von einem Verfahren der eingangs erwähnten Art erfindungsgemäß dadurch gelöst, daß zumindest ein Teilstrom der zur Reduktion eingesetzten chemischen Verbindung(en) oder dieser Verbindung(en) in Mischung mit einem Trägergas vor oder während einer Wärmeübertragung von den durch die Reduktion von den von Stickoxid befreiten Abgasen auf die der Reduktion noch zu unterziehenden, in die Abgase eingeleitet wird. D.h. zumindest ein Teilstrom des Reduktionsmittels wird hierbei dem "kalten" Reingasstrom vor Erreichen des für die selektive Reduktion von Stickoxiden in Abstimmung mit den katalytisch wirkenden Verbindungen gewählten optimalen Temperaturbereichs zugeführt. Dieses Vorgehen bedeutet eine Abkehr von der zuvor geübten Praxis, das Reduktionsmittel unmittelbar vor der Reaktion mit den Stickoxiden den auf die optimale Reaktionstemperatur erhitzten Gasen zuzuführen. Durch die demgegenüber bewußt bei niedrigerem Temperaturniveau eingeleitete Reaktion von Ammoniak mit dem Restgehalt an Verbindungen des Schwefels - insbesondere Schwefeltrioxid und Schwefelsäure - in dem zuvor entschwefelten Gasstrom wird Ammoniumsulfat $(NH_4)_2SO_4$ gebildet. Das Ammoniumsulfat fällt hierbei im Temperaturbereich unterhalb von etwa 200°C in fester Form an und ist - im Gegensatz zu Ammoniumhydrogensulfat - von den wärmeübertragenden und gegebenenfalls auch katalytisch wirkenden Oberflächen unter Einsatz üblicher Reinigungseinrichtungen leicht abzureinigen.

Dieses Verfahren bringt bereits Vorteile, wenn der Entschwefelung nach- und der Wärmeübertragung vorgeschaltet oder während derselben unter Relativbewegung wärmeübertragender Oberflächen innerhalb eines Trägers zu diesem aus- und eintrittsseitig gegenübergestellten Gasanschlüssen die Zufuhr eines Teilstroms des Reduktionsmittels erfolgt, nachfolgend die Gase durch Zufuhr von Fremdwärme auf Reaktionstemperatur erhitzt und dann eine selektive Reduktion der Stickoxide unter Einleitung eines weiteren Teilstroms des Reduktionsmittels und Einsatz katalytisch wirkender Oberflächen innerhalb von statischen Katalysatoren durchgeführt wird.

Zur Einsparung von Bauvolumen ist es jedoch vorteilhaft, wenn unter Relativbewegung eines oder mehrerer Träger Abschnitte wärmeübertragender und katalytisch wirkender Oberflächen zu aus- und eintrittsseitigen Gasanschlüssen den Gasen unter Zufuhr eines Teilstroms eines Reduktionsmittels in Reihe Wärme zugeführt, nachfolgend ein Teil der in den Gasen enthaltenen Stickoxide reduziert, das Gas unter Zufuhr weiteren Reduktionsmittels und durch Einsatz von Fremdwärme erhitzt, der restliche Anteil der Stickoxide reduziert und das Gas schließlich durch Wärmeübertragung auf die der Reduktion noch zu unterziehenden Abgase auf Schornsteineintrittstemperatur abgekühlt wird. Die katalytisch wirkenden Oberflächen werden in diesem Fall auf entgegengerichteten Strömungswegen, d. h. zweifach, zur Verfügung gestellt, wobei die Gaserhitzung und die Umlenkung zwischen den beiden Strömungswegen unter zusätzlicher Einleitung reduzierender Verbindungen vorgenommen wird. Hierdurch wird die Einwirkungszeit der katalytisch wirkenden Oberfläche auf die zu reduzierenden Gase verdoppelt und der Reduktionsgrad erhöht, oder es besteht die Möglichkeit, das Bauvolumen des eingesetzten Reaktors zu vermindern.

Besondere Vorteile ergeben sich hierbei, wenn die Gase durch Wärmeübertragung von den der Entschwefelung zugeführten Rohgasen zu den diese verlassenden Reingasen vorgetrocknet werden.

Alternativ kann aber auch eine Vortrocknung durch Rückführung eines Teilstroms bereits vorgewärmter Gase in die von der Entschwefelung zugeführten, noch vorzuwärmenden Gase erfolgen.

Des weiteren kann es von Vorteil sein, den in Nachschaltung zur Entschwefelung vorgewärmten Abgasen vor der Reduktion enthaltener Stickoxide einen weiteren Teilstrom reduzierender Verbindungen zuzuführen.

Eine Anlage zur Durchführung des erfindungsgemäßen Verfahrens kann so ausgebildet sein, daß sie innerhalb des Stroms der die Entschwefelung verlassenden Reingase in Reihe den wärmeabgebenden Sektor eines umlaufenden Regenerativ-Wärmetauschers mit wärmespeichernden Oberflächen, einen durch Fremdenergie beheizten Erhitzer, einen statischen Katalysator und den wärmeaufnehmenden Sektor des umlaufenden Regenerativ-Wärmetauschers hintereinanderschaltet.

Besonders zweckmäßig im Hinblick auf eine Verringerung des Platzbedarfs bzw. der Verdoppelung der Einwirkungszeit für die selektive Reduktion ist jedoch die Zuordnung katalytisch wirkender Oberflächen zu wärmeübertragenden Oberflächen innerhalb eines oder mehrerer, zu den Gasanschlüssen relativ bewegter Träger. Hierbei werden innerhalb des Stroms der aus der Entschwefelung austretenden Reingase in Reihe Abschnitte wärmeübertragender und katalytisch wirkender Oberflächen innerhalb des einen und im Gegenstrom katalytisch wirkende und wärmeübertragende Abschnitte innerhalb des bezüglich der Drehachse gegenüberliegenden Sektors relativ zu den Gasanschlüssen bewegter Träger im Abstand hintereinander eingeschaltet und der Erhitzer in der Umlenkung des Gasstroms angeordnet. Durch die Hintereinanderschaltung derartiger Abschnitte erfolgt in dem Sektor, in den die entschwefelten Gase zunächst eintreten, eine Durchströmung in Richtung ansteigender Reaktionstemperaturen und nach Zufuhr von Fremdwärme und von im Rahmen der Erhitzung zugeführtem Sauerstoff verbunden mit der Gasumlenkung bzw. Rückführung und Erhitzung im Gegenstrom der Durchgang durch den zum ersten Sektor bezüglich der Drehachse gegenüberliegenden zweiten, mit abfallender Reaktionstemperatur. Damit steht eine verlängerte Expositionszeit der katalytisch wirkenden Oberflächen innerhalb ihrer bezüglich der Drehachse gegenüberliegenden Teilabschnitte zur Verfügung. Weitere Vorteile für eine sparsame und gezielte Einleitung reduzierender Verbindungen ergeben sich, wenn der oder die Träger der Abschnitte wärmeübertragender und katalytisch wirkender Oberflächen rotierend ausgebildet sind, und für die Einleitung eines weiteren Teilstroms eine gleichfalls in Sektoren unterteilte Zone axial zwischen diesen Abschnitten und/oder ein weiterer Sektor zwischen den bezüglich der Drehachse gegenüberliegenden Durchgangskanälen der Gase mit entsprechenden Kanalanschlüssen zur Verfügung stehen.

Es bedeutet keine Abkehr vom Grundgedanken der Erfindung, wenn die Anlage derart ausgestaltet wird, daß Abschnitte wärmeübertragender und katalytisch wirkender Oberflächen in voneinander getrennten und einem diesen je für sich zugeordneten Gehäuse angeordnet werden. In diesem Fall können die Abschnitte unabhängig voneinander mit unterschiedlichen Reinigungsmitteln und/oder in unterschiedlichen Reinigungsintervallen behandelt werden.

Gleiches gilt für die Aufteilung des Abschnitts mit wärmeübertragenden Oberflächen auf parallel geschaltete Oberflächen, um so eine betriebliche Beaufschlagung im Wechsel mit einer außerbetrieblichen Reinigung durchzuführen.

Durch diese Lösung wird die Bildung von flüssigem Ammoniumhydrogensulfat ($NH_4HSO_4$) aus Neben- und Folgereaktionen des als Reduktionsmittel für Stickoxide eingesetzten Ammoniaks mit Schwefeltrioxid und Wasser bzw. Schwefelsäure im optimalen Temperaturbereich der selektiven Reduktion der Stickoxide, die zu mechanischen Verstopfungen und auch Vergiftungen der katalytisch wirkenden Oberflächen durch chemische Reaktionen führen, durch eine dieser Reaktion vorgeschaltete Reaktion zu Ammoniumsulfat bei niedriger liegenden Temperaturen unterbunden. Das Ammoniumsulfat fällt bei den gewählten Temperaturen unter etwa 200°C in fester Form an und ist somit von den wärmeübertragenden Oberflächen und - soweit es durch den Gasstrom bis zu den katalytisch wirkenden Oberflächen geführt wird - auch von diesen - beispielsweise durch Abblasen - leicht zu entfernen.

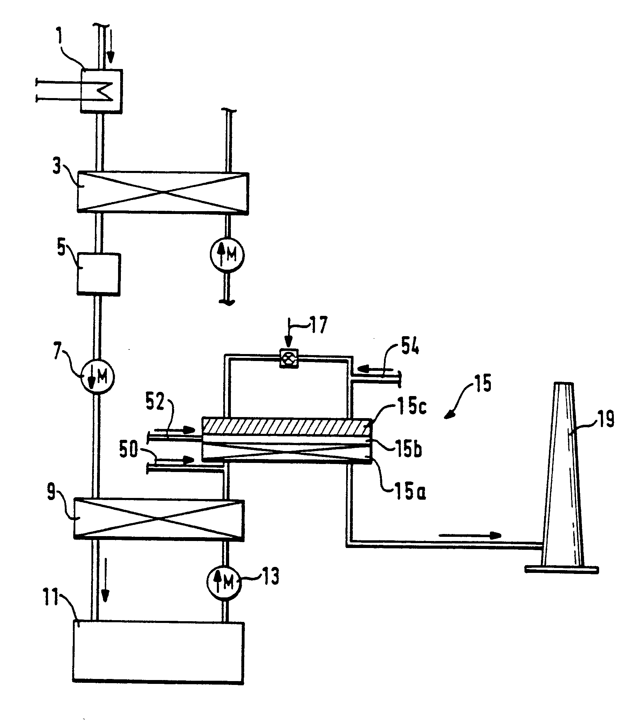

Die Erfindung sowie weitere mit ihr erzielbare Vorteile sind nachstehend in Verbindung mit der Zeichnung näher erläutert, welche ein schematisches Schaltbild einer Anlage zur Durchführung des erfindungsgemäßen Verfahrens zeigt.

Zur Erläuterung des Erfindungsgedankens ist in der Zeichnung schematisch eine Anlage dargestellt, bei der hinter einer Entschwefelungseinrichtung wärmetauschende und katalytisch wirkende Oberflächen in hintereinandergeschalteten Abschnitten und zugleich innerhalb eines ihnen gemeinsamen rotierend angeordneten Trägers zur Verfügung gestellt werden.

Die Rohgase gelangen aus der in der Zeichnung nicht dargestellten Feuerung und den anschließenden Gaszügen des Kessels in den Ekonomiser 1 und werden in diesem weiter auf die Eintrittstemperatur für den Kesselluftvorwärmer 3 für die Vorwärmung der Verbrennungsluft mit Hilfe der Abgaswärme gekühlt, anschließend zur Abscheidung aus der Feuerung mitgeführter staubförmiger Verunreinigungen durch den Filter 5 geleitet und über das Saugzuggebläse 7 einem Gaswärmetauscher 9 zugeführt. Die Speichermasse dieses Gaswärmetauschers, der in einem gegenüber dem Kesselluftvorwärmer niedriger liegenden Temperaturbereich arbeitet, stellt hierzu besonders geeignete Wärmeübertragungsflächen zur Verfügung, um Wärme den der Entschwefelungseinrichtung 11 zuzuführenden Rohgasen zu entziehen und an die die Entschwefelungseinrichtung verlassenden sogenannten "Reingase" nach der Erhöhung von deren Druck durch das Gebläse 13 zu übertragen. Anschließend werden die Reingase einem innerhalb eines nicht dargestellten, umschließenden Gehäuses rotierend angeordneten Träger 15 zugeleitet. Dabei treten die Gase unter Zufuhr eines ersten Teilstroms des Reduktionsmittels über die Zweigleitung 50 durch einen ersten Abschnitt 15a dieses Trägers 15 mit wärmeübertragenden Oberflächen hindurch und nehmen hierbei Wärme auf. Über eine Zwischenzone 15b, in die ein weiterer Teilstrom des Reduktionsmittels über die Zweigleitung 52 eingeführt wird, gelangen die Abgase in den Abschnitt 15c, in dem katalytisch wirkende Oberflächen für die Reduzierung der in den Gasen enthaltenen Stickoxide vorgesehen sind, und in denen die Gase außerdem weiter erwärmt werden. Nach dem Austritt aus dem Träger 15 werden die Gase durch eine Zusatzfeuerung 17 erhitzt, wobei über eine Leitung 54 weiteres Reduktionsmittel zugeführt werden kann, bevor nach einer Gasumlenkung die in den Gasen enthaltenen restlichen Stickoxide innerhalb des bezüglich der Drehachse gegenüberliegenden Sektors des Abschnitts 15c mittels der katalytisch wirkenden Oberflächen des umlaufenden Trägers reduziert werden. Über die Zwischenzone 15b dieses Sektors des Trägers 15 treten die Gase in den mit wärmeübertragenden Oberflächen versehenen Abschnitt 15a über und übertragen bei der Durchströmung Wärme auf diese Oberflächen. Die Gase werden dadurch auf Kamineintrittstemperatur abgekühlt und anschließend dem Kamin 19 zugeleitet.

### Beispiel

Aus dem Saugzuggebläse 7 treten die zuvor im Ekonomiser und im Kesselluftvorwärmer 3 abgekühlten und anschließend im Filter 5 entstaubten Abgase mit einer Temperatur von etwa 130°C in den der nach dem Naßwäscheverfahren arbeitenden Entschwefelungseinrichtung 11 rohgasseitig vorgeschalteten und reingasseitig nachgeschalteten umlaufenden Regenerativ-Wärmetauscher 9 ein und werden in diesem vor dem Eintritt in die Entschwefelungseinrichtung 11 auf 90°C abgekühlt. Die von der wärmeübertragenden Speichermasse des umlaufenden Regenerativ-Wärmetauschers 9 aufgenommene Wärme wird auf die aus der Entschwefelungseinrichtung 11 austretenden Reingase nach Erhöhung von deren Druck übertragen, wobei diese von der Austrittstemperatur von 50°C aus der Entschwefelungseinrichtung auf 80°C erwärmt werden. Den auf diese Weise vorgetrockneten Reingasen wird über eine Zweigleitung 50 ein Teilstrom von Ammoniak als reduzierende Verbindung zugeführt. Die anschließend in den mit wärmeübertragenden Oberflächen versehenen Abschnitt 15a des Trägers 15 eintretenden Gase werden dann durch Übertragung von Wärme von den bereits der Reduktionsbehandlung zur Stickoxidbeseitigung unterzogenen Gase auf eine Temperatur von etwa 230°C erwärmt. Bei den in Strömungsrichtung auf 230°C ansteigenden Temperaturen reagiert der Restschwefelgehalt in den Gasen - vor allem Schwefeltrioxid und Schwefelsäure - mit dem zugeführten Ammoniak zu Ammoniumsulfat. Unter weiter auf 320°C ansteigenden Temperaturen werden in den Gasen enthaltene Stickoxide anschließend unter Darbietung katalytisch wirkender Oberflächen im Abschnitt 15c und Zufuhr eines weiteren Teilstroms Ammoniak über die Zweigleitung 52 reduziert. Durch eine nachgeschaltete Zusatzfeuerung 17 werden die Gase anschließend unter weiterer Zufuhr von Ammoniak über die Leitung 54 auf 350°C erhitzt, um in einem bezüglich der Drehachse gegenüberliegenden Sektor erneut in den Abschnitt 15c mit katalytisch wirkenden Oberflächen zurück- und unter gleichzeitiger Temperaturabnahme auf 270°C hindurchgeleitet zu werden. In den Gasen noch enthaltene Stickoxide werden hierbei reduziert. Anschließend geben die Gase Wärme an die wärmeübertragenden Oberflächen der Speichermasse im Abschnitt 15a ab und werden hierbei auf die Kamineintrittstemperatur von ca. 130°C abgekühlt.

### Patentansprüche

1. Verfahren zur Reinigung der Abgase von Feuerungsanlagen in Nachschaltung zur Entschwefelung unter selektiver Reduktion der Stickoxide durch Einleiten chemischer Verbindungen und Einsatz von katalytisch wirkenden Oberflächen zur Beschleunigung und Einleitung der Reaktion unter Erhitzen der Abgase auf die für die Reduktion erforderliche Temperatur, dadurch gekennzeichnet, daß zumindest ein Teilstrom der zur Reduktion eingesetzten chemischen Verbindung(en) oder dieser Verbindung(en) in Mischung mit einem Trägergas vor oder während einer Wärmeübertragung von den durch die Reduktion von Stickoxiden befreiten Abgasen auf die der Reduktion noch zu unterziehenden in die Abgase eingeleitet wird.

2. Verfahren nach Anspruch 1, dadurch gekennzeichnet, daß zur Wärmeübertragung innerhalb eines Trägers wärmeübertragende Oberflächen relativ zu diesem aus- und eintrittsseitig gegenübergestellten Gasanschlüssen bewegt werden, und in Reihe die Abgase durch Zufuhr von Fremdwärme erhitzt, hierbei dieser vor- oder nachgeschaltet ein weiterer Teilstrom reduzierender Verbindungen zugeführt, die Abgase durch einen statisch angeordneten Katalysator hindurchgeführt und hierbei enthaltene Stickoxide reduziert und diese Abgase schließlich durch die Wärmeübertragung auf die der Reduktion noch zu unterziehenden Abgase auf Schornsteineintrittstemperatur abgekühlt werden.

3. Verfahren nach Anspruch 1, dadurch gekennzeichnet, daß zur Wärmeübertragung und zur Reduktion Abschnitte wärmeübertragender und katalytisch wirkender Oberflächen innerhalb eines oder mehrer Träger relativ zu diesem bzw. diesen aus- und eintrittsseitig gegenübergestellten Gasanschlüssen bewegt werden, die in den Gasen enthaltenen Stickoxide reduziert, die Gase durch Zufuhr von Fremdwärme erhitzt, hierbei der Erhitzung vor- oder nachgeschaltet weitere Stickoxide reduzierende Verbindungen zugeführt und nachfolgend diese weiter reduziert und die Gase schließlich durch die Wärmeübertragung auf die der Reduktion noch zu unterziehenden Abgase auf Schornsteineintrittstemperatur abgekühlt werden.

4. Verfahren nach Anspruch 2 oder 3, dadurch gekennzeichnet, daß die Gase durch Wärmeübertragung von den der Entschwefelung zugeführten Roh- zu den diese verlassenden Reingasen vorgetrocknet werden.

5. Verfahren nach Anspruch 3, dadurch gekennzeichnet, daß den in Nachschaltung zur Entschwefelung vorgewärmten Abgasen vor der Reduktion enthaltener Stickoxide ein weiterer Teilstrom reduzierender Verbindungen zugeführt wird.

6. Anlage zur Durchführung des Verfahrens nach Anspruch 1, gekennzeichnet durch einer Entschwefelungseinrichtung in Reihe nachgeschaltete, wärmeübertragende Speichermassen im Kanal eines umlaufenden Regenerativ-Wärmetauschers, eine Einrichtung zur Zufuhr von Fremdwärme, einen statischen Katalysator und wärmeaufnehmende Speichermassen in einem zweiten Kanal des umlaufenden Regenerativ-Wärmetauschers in Vorschaltung zum Abgaskamin, ferner durch eine Reduktionsmittelquelle mit Anschlußleitungen, welche in die die entschwefelten Gase der kalten Seite des umlaufenden Regenerativ-Wärmetauschers zuführende Gasleitung und/oder direkt in die wärmeübertragenden Oberflächen und/oder in die an diese anschließende, die erwärmten oder erhitzten Gase führende Gasleitung ausmündet.

7. Anlage zur Durchführung des Verfahrens nach Anspruch 1, gekennzeichnet durch einer Entschwefelungseinrichtung (11) in Reihe nachgeschaltete wärmeabgebende und katalytisch wirkende Oberflächen innerhalb von Abschnitten (15a; 15c) des einen Durchgangskanals eines oder mehrerer relativ zu den Gasanschlüssen drehbar ausgebildeter Träger (15), einer Einrichtung zur Zufuhr von Fremdwärme (17), Abschnitte (15c; 15a) katalytisch wirkender und wärmeaufnehmender Oberflächen eines bezüglich der Symmetrieachse des bzw. der Träger (15) gegenüberliegenden und entgegengerichteten Durchgangskanals, und ferner durch eine Antriebsvorrichtung zur schrittweisen oder kontinuierlichen Relativdrehung des bzw. der Träger.

8. Anlage nach Anspruch 7, dadurch gekennzeichnet, daß der oder die Träger der heißgasseitigen katalytisch wirkenden und der kaltgasseitigen wärmeübertragenden Oberflächen als axial hintereinandergeschaltete Abschnitte (15c; 15a) umlaufend und die zugehörigen heiß- und kaltgasseitigen Gasanschlüsse stationär angeordnet sind.

9. Anlage nach Anspruch 8, dadurch gekennzeichnet, daß innerhalb eines gemeinsamen umschließenden Gehäuses die heißgasseitigen katalytisch wirkenden und die kaltgasseitigen wärmeübertragenden Abschnitte (15c; 15a) über eine gleichfalls in Sektoren unterteilte Zwischenzone (15b) in einem gemeinsamen Träger Durchgangskanäle für die Gase bilden, und daß in diese Zwischenzone (15b) eine Zweigleitung (52) geführt ist, über welche reduzierende chemische Verbindungen in die katalytisch wirkenden Abschnitte (15c) einleitbar sind.

10. Anlage nach Anspruch 8, dadurch gekennzeichnet, daß an dem den heißgasseitigen katalytisch wirkenden Abschnitt (15c) umschließenden Gehäuse zusätzliche Anschlußstutzen zur Bildung eines weiteren, zur Einleitung von reduzierenden chemischen Verbindungen vorgesehenen Sektors angeordnet sind.

## Claims

1. Process for cleaning exhaust gases from furnace installations after desulfuration, with selective reduction of the nitrogen oxides by introduction of chemical compounds and the use of catalytically acting surfaces for the acceleration and initiation of the reaction with heating the exhaust gases to the temperature necessary for the reduction, characterized in that at least a portion of the stream of the chemical compound or compounds used for the reduction, or of this compound or compounds in mixture with a carrier gas, is introduced into the exhaust gases before or during a heat transfer from the exhaust gases freed of nitrogen oxides by the reduction, to the exhaust gases yet to be subjected to the reaction.

2. Process according to claim 1, characterized in that, for the heat transfer within a carrier, heat-transfer surfaces are moved relative to gas connections opposite the carrier on the exit and entry side, and successively the exhaust gases are heated by the input of outside heat, while ahead of or behind the latter an additional partial stream of reducing compounds is fed, the exhaust gases are passed through a statically disposed catalyst, and these exhaust gases lastly are cooled to the smokestack temperature by the heat transfer to the exhaust gases yet to be subjected to the reduction.

3. Process according to claim 1, characterized in that, for the heat transfer and for the reduction, sections of heat-transfer and catalytically active surfaces are moved within one or more carriers relative to gas connections opposite the carrier on the exit and entry side, the nitrogen oxides contained in the gases are reduced, the gases are heated by the input of outside heat, while additional nitrogen oxide reducing compounds are fed in before or after the heating, and then these are further reduced and the gases lastly are cooled to the smokestack temperature by the transfer of heat to the exhaust gases yet to be subjected to the reduction.

4. Process according to claim 2 or 3, characterized in that the gases are pre-dried by the transfer of heat from the raw gases fed to the desulfuration to the clean gases leaving the latter.

5. Process according to claim 3, characterized in that an additional partial stream of reducing compounds is fed, before the reduction of contained nitrogen oxides, to the exhaust gases preheated subsequent to the desulfuration.

6. Apparatus for the performance of the process according to claim 1, characterized by heat-transferring storage masses connected in series to the output of a desulfuration system in the channel of a rotary regenerative heat exchanger, a system for the input of outside heat, a static catalyst and heat-absorbing storage masses in a second channel of the rotary regenerative heat exchanger preceding the smokestack, furthermore by a reducing agent source with connecting lines, which leads into the gas line feeding the desulfurated gases to the cold side of the rotary regenerative heat exchanger and/or directly to the heat-transferring surfaces and/or to the gas line adjoining the latter and carrying the warmed or heated gases.

7. Apparatus for the performance of the process according to claim 1, characterized by heat-yielding and catalytically active surfaces connected in series to the output of a desulfurizing system (11) within sections (15a; 15c) of the one through-passage of one or more carriers (15) rotatably configured relative to the gas connections, of a system for the feeding of outside heat (17), sections (15c; 15a) of catalytically active and heat absorbing surfaces of a through-passage situated opposite and contrariwise with regard to the axis of symmetry of the carrier or carriers (15), and also by a driving system for the step-wise or continuous relative rotation of the carrier or carriers.

8. Apparatus according to claim 7, characterized in that the carrier or carriers of the catalytically active surfaces on the hot gas side and of the heat-transferring surfaces on the cold gas side are disposed rotatingly as sections (15c; 15a) connected in tandem axially, and the corresponding gas connections on the hot and cold gas sides are disposed stationarily.

9. Apparatus according to claim 8, characterized in that, within a common enveloping housing, the catalytically active sections on the hot gas side and the heat transferring sections on the cold gas side (15c; 15a) form through an intermediate zone (15b) likewise divided into sectors through passages for the gases in a common carrier (15), and that a branch duct (52) is carried into this intermediate zone (15b), through which reducing chemical compounds are introducible into the catalytically active sections (15c).

10. Apparatus according to claim 8, characterized in that, on the housing enveloping the catalytically active section (15c) on the hot gas side, additional connections are disposed for the formation of an additional sector provided for the introduction of reducing chemical compounds.

**Revendications**

1. Procédé d'épuration des fumées des foyers après leur désulfuration, par réduction sélective des oxydes d'azote par introduction de composés chimiques et emploi de surfaces à action catalytique pour accélérer et amorcer la réaction, avec chauffage des fumées à la température nécessaire à la réduction, caractérisé par le fait qu'au moins un courant partiel du ou des composés chimiques employés pour la réduction ou de ce ou ces composés mélangés à un gaz porteur est introduit dans les fumées avant ou pendant une transmission de chaleur des fumées débarrassées des oxydes d'azote par la réduction aux fumées non encore soumises à la réduction.

2. Procédé selon la revendication 1, caractérisé par le fait que pour la transmission de chaleur, à l'intérieur d'un support, des surfaces transmettrices de chaleur sont mues par rapport à des raccordements de gaz placés en face de celui-ci du côté sortie et du côté entrée, et les fumées sont chauffées en série par apport de chaleur extérieure, un autre courant partiel de composés réducteurs étant apporté en amont ou en aval de ce chauffage, les fumées traversent un catalyseur fixe et les oxydes d'azote qu'elles contiennent sont alors réduits et ces fumées, enfin, sont refroidies à la température d'entrée dans la cheminée par la transmission de chaleur aux fumées non encore soumises à la réduction.

3. Procédé selon la revendication 1, caractérisé par le fait que pour la transmission de chaleur et pour la réduction, des parties de surfaces transmettrices de chaleur et à action catalytique sont, à l'intérieur d'un ou de plusieurs supports, mues par rapport à des raccordements de gaz placés en face de celui-ci ou de ceux-ci du côté entrée et du côté sortie, les oxydes d'azote contenus dans les gaz sont réduits, les gaz sont chauffés par apport de chaleur extérieure, un supplément de composés réduisant les oxydes d'azote étant apporté en amont ou en aval de ce chauffage, et ensuite, ces derniers subissent une réduction supplémentaire, et les gaz, enfin, sont refroidis à la température d'entrée dans la cheminée par la transmission de chaleur aux fumées non encore soumises à la réduction.

4. Procédé selon l'une des revendications 2 et 3, caractérisé par le fait que les gaz sont préséchés par transmission de chaleur des gaz bruts allant à la désulfuration aux gaz purs quittant celle-ci.

5. Procédé selon la revendication 3, caractérisé par le fait qu'aux fumées préchauffées en aval de la désulfuration est apporté, avant la réduction des oxydes d'azote qu'elles contiennent, un autre courant partiel de composés réducteurs.

6. Installation pour la mise en oeuvre du procédé de la revendication 1, caractérisée par des masses accumulatrices transmettrices de chaleur placées en série en aval d'un dispositif de désulfuration dans le canal d'un échangeur de chaleur régénérateur tournant, un dispositif d'apport de chaleur extérieure, un catalyseur fixe et des masses accumulatrices absorbeuses de chaleur dans un deuxième canal dans l'échangeur de chaleur régénérateur tournant en amont de la cheminée à fumées, en outre par une source de réducteur avec branchements qui débouchent dans la conduite de gaz amenant les gaz désulfurés au côté froid de l'échangeur de chaleur régénérateur tournant et/ou directement dans les surfaces transmettrices de chaleur et/ou dans la conduite de gaz se raccordant à celles-ci qui conduit les gaz échauffés ou chauffés.

7. Installation pour la mise en oeuvre du procédé de la revendication 1, caractérisée par des surfaces émettrices de chaleur et à action catalytique placées en série en aval d'un dispositif de désulfuration (11) à l'intérieur de parties (15a; 15c) d'un canal de passage d'un ou de plusieurs supports (15) pouvant tourner par rapport aux raccordements de gaz, un dispositif d'apport de chaleur extérieure (17), des parties (15c; 15a) de surfaces à action catalytique et absorbeuses de chaleur d'un canal de passage opposé par rapport à l'axe de symétrie du ou des supports (15) et dirigé en sens contraire, et en outre par un dispositif moteur pour la rotation relative pas à pas ou continue du ou des supports.

8. Installation selon la revendication 7, caractérisée par le fait que le ou les supports des surfaces à action catalytique côté gaz chauds et des surfaces transmettrices de chaleur côté gaz froids, sous forme de parties placées en série axialement (15c; 15a), sont montés tournants et les raccordements de gaz côté gaz chauds et côté gaz froids associés sont fixes.

9. Installation selon la revendication 8, caractérisée par le fait qu'à l'intérieur d'un carter commun enveloppant, les parties à action catalytique côté gaz chauds et les parties transmettrices de chaleur côté gaz froids (15c; 15a), avec entre elles une zone intermédiaire (15b) également divisée en secteurs, forment dans un support commun (15) des canaux de passage des gaz, et que dans la zone intermédiaire (15b) pénètre un branchement (52) par où des composés chimiques réducteurs peuvent être introduits dans les parties à action catalytique (15c).

10. Installation selon la revendication 8, caractérisée par le fait que sur le carter enveloppant la partie à action catalytique côté gaz chauds (15c) sont prévues des tubulures supplémentaires de raccordement pour la formation d'un autre secteur prévu pour l'introduction de composés chimiques réducteurs.